# EUROPÄISCHE PATENTSCHRIFT

(11) **EP 2 188 564 B1**
(45) Veröffentlichungstag und Bekanntmachung des Hinweises auf die Patenterteilung: **25.01.2012**
(21) Anmeldenummer: 08785523.5
(22) Anmeldetag: 13.08.2008
(51) Int. Cl.: F16L 55/033, F16L 55/04

(54) **DÄMPFUNGSEINRICHTUNG, INSBESONDERE PULSATIONSDÄMPFER**
ATTENUATION DEVICE, PARTICULARLY PULSATION ATTENUATOR
DISPOSITIF D'AMORTISSEMENT, EN PARTICULIER AMORTISSEUR DE PULSATIONS

(30) Priorität: 21.09.2007 DE 102007045266
(43) Veröffentlichungstag der Anmeldung: 26.05.2010
(73) Patentinhaber: Hydac Technology Gmbh, 66273 Sulzbach/Saar (DE)
(72) Erfinder: WEBER, Norbert, 66280 Sulzbach/Saar (DE)
(74) Vertreter: Bartels, Martin Erich Arthur
(86) Internationale Anmeldenummer: PCT/EP2008/006647
(87) Internationale Veröffentlichungsnummer: WO 2009/039916

(56) Entgegenhaltungen:
- DE-A1- 3 808 387
- DE-C- 977 514
- US-A1- 2005 022 548
- US-H- H1 317

## Beschreibung

Die Erfindung betrifft eine Dämpfungseinrichtung, insbesondere Pulsationsdämpfer, mit einer Ummantelung, die einen von einem Fluid entlang einer Strömungsachse durchströmbaren Fluidraum definiert, und mit einem innerhalb der Ummantelung befindlichen Dämpfungselement aus federnachgiebigem Werkstoff, gemäß der Merkmalsausgestaltung des Oberbegriffes des Patentanspruches 1.

Dämpfungseinrichtungen zum Glätten von Druckstößen in Fluidsystemen und zur Verringerung der dadurch bedingten Vibrationen und Geräusche lassen sich hauptsächlich in zwei bekannte Gruppen von Dämpfungseinrichtungen einteilen, nämlich zum einen in hydropneumatische Dämpfer, die in der Art von Hydrospeichern ein zusätzliches Gasvolumen enthalten, und zum anderen in Flüssigkeitsschalldämpfer, sogenannte Silencer, bei denen ohne zusätzliches Gasvolumen eine Dämpfungswirkung durch Reflexion oder Absorption erfolgt. Zum diesbezüglichen Stand der Technik wird auf das Fachbuch "Der Hydraulik Trainer, Band 3", herausgegeben von Mannesmann Rexroth GmbH, Seiten 106 und 107, hingewiesen.

Mit den hydropneumatischen Dämpfern lassen sich gute Eigenschaften in einem Frequenzband erzielen, das von sehr niedrigen Frequenzen bis zu etwa 400 Hertz reicht, so dass derartige Dämpfer an sich für einen Einsatz in Fluidsystemen geeignet wären, bei denen Druckpulsationen durch den Betrieb von Hydropumpen, deren Ein- und Abschaltvorgänge sowie durch Schaltvorgänge von Ventilen in diesem Frequenzband auftreten. Da derartige Dämpfer mit zusätzlichem Gasvolumen jedoch sowohl sperrig als auch schwergewichtig sind, lassen sich derartige Dämpfungseinrichtungen auf vielen Einsatzgebieten nicht verwenden, wo ein sehr beengter Einbauraum vorhanden ist und eine leichtgewichtige Bauweise erforderlich ist, wie dies beispielsweise bei Hydrauliksystemen in Kraftfahrzeugen der Fall ist. Weitere Nachteile von Dämpfungseinrichtungen mit Gasfüllung sind, dass ihre Dämpfungswirkung temperaturabhängig schwankt und dass die Dämpfungswirkung sich durch Gasverluste aufgrund der Permeation insgesamt verschlechtert.

Demgegenüber zeichnen sich die sogenannten Silencer durch eine demgegenüber weit kompaktere und leichtgewichtige Bauweise aus, ihre Einsatzmöglichkeit ist jedoch dadurch eingeschränkt, dass die Dämpfungswirkung erst bei höheren Frequenzen von mehr als etwa 200 Hertz ausreichend ist. Dies verhindert einen Einsatz in der Kraftfahrzeugtechnik, wo bei Hydrauliksystemen, die dem Lenk-, Brems- oder Stabilitätskontrollsystem zugeordnet sind, oder bei aktiven Aufhängungssystemen, Schaltvorgänge in einem sehr großen Frequenzband stattfinden können, das von sehr niedrigen Frequenzen bis hohen Frequenzen von 500 Hertz oder mehr reicht.

Um den obigen Problemen zu begegnen, ist in DE 43 38 912 C1 ein Druckstoßdämpfer zur Reduzierung von Druckschlägen in Flüssigkeitsleitungen vorgeschlagen. Bei dieser bekannten Lösung sind die Druckschwankungen, die bei den hydropneumatisch arbeitenden Dämpfern an das kompressible Gasvolumen angekoppelt sind, das als nachgiebiges Dämpfungselement wirkt, an ein federnachgiebiges Material angekoppelt. Dadurch ergibt sich zwar ein den hydropneumatischen Dämpfern ähnliches Frequenzverhalten, bei demgegenüber verringerter Baugröße und verringertem Gewicht, es hat sich jedoch gezeigt, dass mittels dieser bekannten Lösung keine ausreichende Dämpfungswirkung erreichbar ist.

Durch die US H1 317 H ist eine gattungsgemäße Dämpfungseinrichtung bekannt, insbesondere in Form eines Pulsationsdämpfers, mit einer Ummantelung, die einen von einem Fluid entlang einer Strömungsachse durchströmbaren Fluidraum definiert, und mit einem innerhalb der Ummantelung befindlichen Dämpfungselement aus federnachgiebigem Werkstoff, wobei das Dämpfungselement zumindest zwei die Strömungsachse zumindest teilweise umgebende, zumindest teilweise übereinanderliegend angeordnete Ringkörper aufweist.

Bei der bekannten Lösung sind die einzelnen Ringkörper als jeweiliges Dämpfungselement entlang der Strömungsachse entweder konzentrisch übereinanderliegend unter Bildung nur eines Ringkörperpaares oder hintereinander liegend angeordnet oder dergestalt ausgebildet, dass ein Dämpfungselement das andere Dämpfungselement vollständig umfasst. Ferner sind bei der bekannten Lösung die Dämpfungselemente in Form der Ringkörper von einer Umhausung als Ummantelung nur zur Umgebung hin umfasst, wobei in Richtung des durchströmbaren Fluidraums ein separates Gehäuse in Form eines Durchflussrohres angeordnet ist, das mit der vorstehend genannten Umhausung unter Zwischenlage einer weiteren Dicht-oder Dämpfungslage in der Art einer Schellenumfassung verbunden ist. Was eine besonders gute Dämpfungswirkung anbelangt, lässt die bekannte Lösung noch Wünsche offen.

Durch die DE 38 08 387 A1 ist darüber hinaus ein Verfahren, insbesondere zur Herstellung eines Strömungskanals mit einem größeren Strukturteil und einem inneren, schallabsorbierenden Auskleidungsteil aus offenzelligem, verhautetem Schaumstoff bekannt. Zur einfacheren Herstellbarkeit und zur Erzielung eines erhöhten Gebrauchswertes schlägt die bekannte Lösung vor, dass ein flüssiges Reaktionsgemisch in das als Form dienendes Strukturteil eingebracht wird, und dass sodann das Auskleidungsteil in dem Strukturteil durch freies Verschäumen gebildet wird. Bei einem derart hergestellten Strömungskanal, bei dem das Auskleidungsteil durch freies Verschäumen in dem Strukturteil gebildet ist, besitzt die auf dem Schaumstoff sich bildende Haut eine Dicke von 100µm oder weniger. Trotz der damit einhergehenden guten Schallabsorbtionsfähigkeit ist diese bekannte Lösung für den Einsatz in der Kraftfahrzeugtechnik nur wenig geeignet, insbesondere im Hinblick auf die in diesem Bereich auftretenden hohen Fluiddrücke und unter Einbezug der Aggressivität der zu transportierenden Fluide.

Im Hinblick auf diesen Stand der Technik stellt sich die Erfindung die Aufgabe, eine Dämpfungseinrichtung zur Verfügung zu stellen, die, trotz kompakter und leichgewichtiger Bauweise, wie dies für einen Einsatz in der Kraftfahrzeugtechnik erforderlich ist, sich durch eine besonders gute Dämpfungswirkung auszeichnet.

Erfindungsgemäß ist diese Aufgabe durch eine Dämpfungseinrichtung gelöst, die die Merkmale des Patentanspruches 1 in seiner Gesamtheit aufweist.

Dadurch, dass gemäß dem kennzeichnende Teil des Patentanspruches 1 mindestens ein weiteres Ringkörperpaar vorhanden ist, das zwei weitere, die Strömungsachse zumindest teilweise umgebende, und zumindest teilweise übereinanderliegend angeordnete Ringkörper aufweist, dass die Ummantelung für die zu kammernden einzelnen Ringkörper aus einem doppelwandigen Hohlzylinder gebildet ist, mit einer an den Fluidraum angrenzenden, diesen fluiddicht vom Dämfpungselement trennenden inneren Wand, an der der jeweilige innere Ringkörper anliegt, und einer über den jeweils äußeren Ringkörper liegenden Außenwand, und dass zumindest zwei Paare mit den einander umgebenden Ringkörpern in Strömungsachse gesehen hintereinander liegend in dem doppelwandigen Hohlzylinder aufgenommen sind, ist durch eine derartige Kombination aus jeweils federnachgiebigen Körpern eine Realisierung von Federwegen und Federkennlinien möglich, die in Anpassung an ein gegebenes Frequenzband eine optimale Dämpfungswirkung gewährleisten.

Um dahingehend eine optimale Dämpfungswirkung zu erzielen, sind in Axialrichtung der Strömungsachse hintereinander liegend mehrere Paare aus einander umgebenden Ringkörpern vorgesehen, wobei wiederum hinsichtlich der Dichte und der Nachgiebigkeit des Werkstoffes Ringpaare unterschiedlicher Eigenschaften vorgesehen sein können.

Bei der Gestaltung des Dämpfungselementes können Ringkörper jeweils gleicher axialer Länge und/oder Ringkörper mit gleicher radialer Dicke, bezogen auf die Strömungsachse, vorgesehen sein, je nach den baulichen Gegebenheiten oder dem gewünschten Kennlinienverlauf.

Dabei kann die Anordnung so getroffen sein, dass die Ringkörper aufeinander anliegend angeordnet sind.

Wenn hierbei Ringkörperpaare aus unterschiedlichen Werkstoffen, beispielsweise unterschiedlicher Dichte und dadurch unterschiedlich starker Nachgiebigkeit, benutzt werden, kann vorzugsweise der der Strömungsachse näher liegende, innere Ringkörper jedes Ringkörperpaares aus einem Werkstoff stärkerer Nachgiebigkeit gebildet sein, als dies beim darüber liegenden Ringkörper der Fall ist. Mit entsprechenden Werkstoffkombinationen lässt sich der gewünschte Kennlinienverlauf, beispielsweise ein progressiver Verlauf, verwirklichen.

Bei bevorzugten Ausführungsbeispielen weisen die Ringkörper eine unterbrechungsfreie, geschlossene Ringform auf, wobei die Ringkörper eine zur Strömungsachse konzentrische Ringform besitzen können.

Bei den Ausführungsbeispielen, bei denen die Ummantelung den Fluidraum fluiddicht vom Dämpfungselement trennt, kann es sich bei dem Werkstoff der Ringkörper um ein offenporiges oder zelliges Material handeln.

Als Werkstoff kommen beispielsweise ein PU-Schaum oder ein synthetischer Kautschuk in Frage, insbesondere Ethylen-Propylen-Dien-Kautschuk (EPDM), vorzugsweise geschäumtes EPDM.

Als Material der Ummantelung eignen sich öl- und kraftstoffresistente Elastomere, beispielsweise ein Fluor-Kautschukmaterial, insbesondere auf der Basis von Vinylidenfluorid-Hexafluorpropylen-Copolymerisaten.

Nachstehend ist die Erfindung anhand von in der Zeichnung dargestellten Ausführungsbeispielen im Einzelnen erläutert. Es zeigen:
- Fig.1: einen schematisch vereinfachten Längsschnitt eines Ausführungsbeispiels der erfindungsgemäßen Dämpfungseinrichtung;
- Fig.2: einen der Fig.1 entsprechenden Längsschnitt, wobei die Einzelteile jedoch in auseinandergezogener Position dargestellt sind, und
- Fig.3: einen der Fig.1 ähnlichen Längsschnitt eines zweiten Ausführungsbeispiels der Dämpfungseinrichtung.

Bei beiden in der Zeichnung dargestellten Ausführungsbeispielen weist die Dämpfungseinrichtung eine Ummantelung 1 aus einem öl- und kraftstoffresistenten, elastomeren Werkstoff auf, beispielsweise aus synthetischem Kautschuk. Bei den vorliegenden Beispielen handelt es sich dabei um ein Fluor-Kautschukmaterial auf der Basis von Vinylidenfluorid-Hexafluorpropylen-Copolymerisaten. Ein derartiger Werkstoff ist unter der Handelsbezeichnung Viton^{®} im Handel erhältlich. Es versteht sich, dass anstelle von Elastomeren andersartige Werkstoffe, beispielsweise ein metallischer Werkstoff, die Ummantelung bilden könnten.

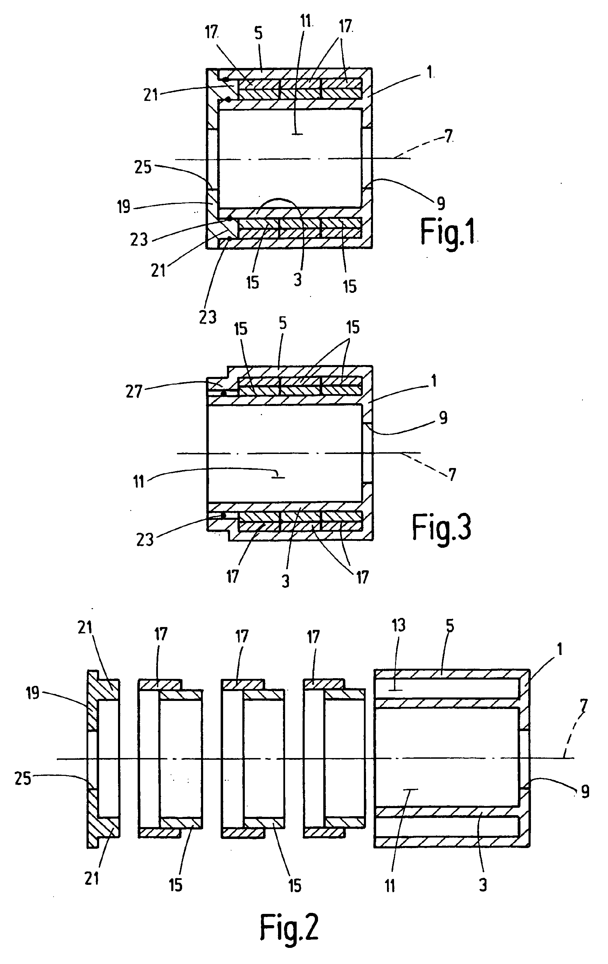

Wie am deutlichsten der Fig.2 entnehmbar ist, ist die Ummantelung 1 in der Art eines doppelwandigen Hohlzylinders gestaltet, mit einer kreiszylindrischen Innenwand 3 und einer kreiszylindrischen Außenwand 5, die zu einer Achse 7 konzentrisch sind. Diese stellt die Strömungsachse für den Durchstrom einer zu dämpfenden Fluidströmung dar, die über eine in der Stirnwand der Ummantelung 1 vorgesehene Öffnung 9 in den inneren Fluidraum 11 einströmt.

Zwischen innerer Wand 3 und äußerer Wand 5 befindet sich eine Kammer 13 in Form eines Ringraumes, in der bei den gezeigten Beispielen das eigentliche Dämpfungsmaterial gekammert aufgenommen ist. Wie am deutlichsten aus Fig.2 zu ersehen ist, handelt es sich hierbei um eine Kombination aus Schaumeinlagen, wobei diese Kombination aus drei Paaren übereinanderliegend angeordneter Ringkörper gebildet ist, nämlich jeweils einem inneren Ringkörper 15 und einem äußeren Ringkörper 17.

Bei beiden gezeigten Ausführungsbeispielen sind die Ringkörper 15,17 geschlossene runde Ringe, die fluchtend und aneinander anliegend übereinander angeordnet sind, wobei innerer Ringkörper 15 und äußerer Ringkörper 17 jedes Paares die gleiche radiale Dicke und die gleiche axiale Länge aufweisen.

Alternativ könnte es sich um Ringkörper unterschiedlicher radialer Dicken und/oder unterschiedlicher axialer Längen handeln. Anstelle geschlossener, unterbrechungsfreier Ringkörper könnte es sich um aus einzelnen Ringsegmenten zusammengesetzte Ringkörper handeln.

Während, wie aus Fig.1 zu ersehen ist, die Ringkörperpaare axial aneinander stoßend angeordnet sind, könnten zwischen aufeinanderfolgenden Ringkörperpaaren Lücken vorhanden sein.

Bei dem Beispiel von Fig.1 und 2 ist die Ummantelung 1 an dem der Öffnung 9 entgegengesetzten Ende durch einen Deckel 19 geschlossen, der aus dem gleichen Werkstoff wie der übrige Teil der Ummantelung 1 gebildet ist. Der Deckel 19 weist einen axial nach innen vorspringenden Ringrand 21 auf, der als Verschlußteil der Kammer 13 zwischen Innenwand 3 und Außenwand 5 passend eingreift und an Klebestellen 23 (s. Fig.1) fixiert ist. Als Klebstoff kann ein Zwei-Komponenten-Kleber vorgesehen sein. Der Deckel 19 weist eine der Öffnung 9 entsprechende Öffnung 25 für den Fluiddurchstrom auf.

Das Ausführungsbeispiel gemäß Fig.3 unterscheidet sich demgegenüber lediglich dadurch, dass die Ummantelung 1 keinen Deckel an dem der Öffnung 9 entgegengesetzten Ende des Fluidraumes 11 aufweist. Stattdessen weist die Außenwand 5 der Ummantelung 1 als Abschluß der die Ringkörper 15 und 17 aufnehmenden Kammer einen endseitigen, radial nach innen eingezogenen Wandteil 27 auf, der über die Klebestelle 23 mit der Innenwand 3 verklebt ist. Wie beim ersten Ausführungsbeispiel ist mittels der Klebestelle 23 ein fluiddichter Verschluß der die Ringkörperpaare enthaltenden Kammer 13 gegenüber dem Fluidraum 11 gebildet. Durch diese fluiddichte Separierung ergeben sich freie Wahlmöglichkeiten hinsichtlich der Benutzung von Dämpfungsmaterialien. So können sowohl geschlossenporige Stoffe als auch offenporige oder zellige Materialien benutzt werden. Vorteilhaft können PU-Schäume vorgesehen sein oder synthetische Kautschuke, wie Ethylen-Propylen-Dien-Kautschuk (EPDM), vorzugsweise geschäumtes EPDM. Wie bereits bemerkt, könnten anstelle der gezeigten, einheitlichen Ringkörperpaare Ringkörper in anderer Anzahl und in unterschiedlicher übereinanderliegender, nicht fluchtender Anordnung vorgesehen sein. Insbesondere ist die beispielsweise durch die Werkstoffdichte bestimmte Federnachgiebigkeit bei den inneren Ringkörpern 15 und den äußeren Ringkörpern 17 zur Erzielung gewünschter Dämpfungskennlinien in Anpassung an das vorherrschende Frequenzband unterschiedlich gewählt, wobei vorzugsweise die dem Fluidraum 11 näher gelegenen inneren Ringkörper 15 eine stärkere Federnachgiebigkeit besitzen als die sie an der Außenseite abstützenden äußeren Ringkörper 17. Auch können die in Axialrichtung aufeinanderfolgenden Ringkörperpaare eine unterschiedliche Federnachgiebigkeit besitzen. Des weiteren könnte die Ummantelung 1 so aufgebaut sein, dass, insbesondere bei erhöhtem Drucknivenau, die Außenwand 5 als Abstützung der äußeren Ringkörper 17 eine starre Struktur (beispielsweise metallische Struktur) besitzt, während die Innenwand 3 aus einem nachgiebigen Elastomer gebildet wird, um die Druckstöße an das Dämpfungsmaterial wirksam anzukoppeln.

Die Ummantelung der Körper 17 kann auch mittels spezieller Lacke (Beschichtungen) im Tauch-, Streich- oder Spritzverfahren aufgebracht werden. Diese Lacke basieren zum Beispiel auf HNBR oder Viton ^{®}. Durch mehrfaches Tauchen oder Spritzen kann eine quasi beliebig dicke Schicht aufgebracht werden, bis eine flüssigkeitsdichte und beständige Schicht aufgebracht ist.

## Patentansprüche

1. Dämpfungseinrichtung, insbesondere Pulsationsdämpfer,
- mit einer Ummantelung (1), die einen von einem Fluid entlang einer Strömungsachse (7) durchströmbaren Fluidraum (11) definiert, und
- mit einem innerhalb der Ummantelung befindlichen Dämpfungselement aus federnachgiebigem Werkstoff,
- wobei das Dämpfungselement zwei die Strömungsachse (7) zumindest teilweise umgebende, zumindest teilweise übereinanderliegend angeordnete Ringkörper (15,17) als ein Ringkörperpaar aufweist,
- **dadurch gekennzeichnet, dass** mindestens ein weiteres Ringkörperpaar vorhanden ist, das zwei weitere, die Strömungsachse (7) zumindest teilweise umgebende, und zumindest teilweise übereinanderliegend angeordnete Ringkörper (15, 17) aufweist,
- dass die Ummantelung (1) für die zu kammernden einzelnen Ringkörper (15, 17) aus einem doppelwandigen Hohlzylinder gebildet ist, mit einer an den Fluidraum (11) angrenzenden, diesen fluiddicht vom Dämpfungselement trennenden inneren Wand (3), an der der jeweilige innere Ringkörper (15) anliegt, und einer über den jeweils äußeren Ringkörper (17) liegenden Außenwand (5), und
- dass zumindest zwei Paare mit den einander umgebenden Ringkörpern (15, 17) in Strömungsachse (7) gesehen hintereinander liegend in dem doppelwandigen Hohlzylinder aufgenommen sind.

2. Dämpfungseinrichtung nach Anspruch 1, **dadurch gekennzeichnet, dass** die Ringkörper (15,17) die gleiche axiale Länge aufweisen.

3. Dämpfungseinrichtung nach Anspruch 1 oder 2, **dadurch gekennzeichnet, dass** die Ringkörper (15,17) die gleiche radiale Dicke aufweisen.

4. Dämpfungseinrichtung nach einem der Ansprüche 1 bis 3, **dadurch gekennzeichnet, dass** die Ringkörper (15,17) aufeinander anliegend angeordnet sind.

5. Dämpfungseinrichtung nach einem der Ansprüche 1 bis 4, **dadurch gekennzeichnet, dass** der der Strömungsachse (7) näherliegende, innere Ringkörper (15) jedes Ringkörperpaares aus einem Werkstoff gebildet ist, der eine stärkere Nachgiebigkeit besitzt als der Werkstoff des darüberliegenden Ringkörpers (17).

6. Dämpfungseinrichtung nach einem der Ansprüche 1 bis 5, **dadurch gekennzeichnet, dass** die Ringkörper (15,17) eine unterbrechungsfreie, geschlossene Ringform besitzen.

7. Dämpfungseinrichtung nach einem der Ansprüche 1 bis 6, **dadurch gekennzeichnet, dass** die Ringkörper (15,17) eine zur Strömungsachse (7) konzentrische Ringform besitzen.

8. Dämpfungseinrichtung nach einem der Ansprüche 1 bis 7, **dadurch gekennzeichnet, dass** das Dämpfungsmaterial der Ringkörper (15,17) ein offenporiges oder zelliges Material ist.

9. Dämpfungseinrichtung nach einem der Ansprüche 1 bis 7, **dadurch gekennzeichnet, dass** das Dämpfungsmaterial der Ringkörper (15,17) ein geschlossenporiges Material ist.

10. Dämpfungseinrichtung nach einem der Ansprüche 1 bis 9, **dadurch gekennzeichnet, dass** als Dämpfungsmaterial ein Kunststoffmaterial vorgesehen ist.

11. Dämpfungseinrichtung nach Anspruch 10, **dadurch gekennzeichnet, dass** als Dämpfungsmaterial ein PU-Schaum vorgesehen ist.

12. Dämpfungseinrichtung nach Anspruch 10, **dadurch gekennzeichnet, dass** als Dämpfungsmaterial ein synthetischer Kautschuk, insbesondere Ethylen-Propylen-Dien-Kautschuk (EPDM), vorzugsweise geschäumtes EPDM, vorgesehen ist.

13. Dämpfungseinrichtung nach einem der Ansprüche 1 bis 12, **dadurch gekennzeichnet, dass** als Material der Ummantelung (1) ein Fluor-Kautschukmaterial, insbesondere auf der Basis von Vinylidenfluorid-Hexafluorpropylen-Copolymerisaten, vorgesehen ist.

## Claims

1. An attenuation device, in particular a pulsation attenuator,
- comprising a casing (1) which defines a fluid chamber (11) through which a fluid can flow along a flow axis (7), and
- comprising an attenuation element made of resilient material located within the casing,
- the attenuation element having two annular bodies (15, 17) at least partially surrounding the flow axis (7) and at least partially arranged lying one over the other as a pair of annular bodies,
- **characterised in that** there is at least one further pair of annular bodies that has two further annular bodies (15, 17) at least partially surrounding the flow axis (7) and at least partially arranged lying one over the other,
- that the casing (1) for the individual annular bodies (15, 17) to be chambered is formed by a double-walled hollow cylinder, with an inner wall adjacent to the fluid chamber (11) and separating the latter, fluid-tight, from the attenuation element (3) which the respective inner annular body (15) adjoins, and an outer wall (5) lying over the respective outer annular body (17), and
- that at least two pairs are held in the double-walled hollow cylinder with the annular bodies (15, 17) surrounding one another lying one behind the other, as viewed in the flow axis (7).

2. The attenuation device according to Claim 1, **characterised in that** the annular bodies (15, 17) have the same axial length.

3. The attenuation device according to Claim 1 or 2, **characterised in that** the annular bodies (15, 17) have the same radial thickness.

4. The attenuation device according to any of Claims 1 to 3, **characterised in that** the annular bodies (15, 17) are arranged adjoining one another on top of one another.

5. The attenuation device according to any of Claims 1 to 4, **characterised in that** the inner annular body (15) of each pair of annular bodies which is nearer the flow axis (7) is formed from a material of greater resilience than the material of the overlying annular body (17).

6. The attenuation device according to any of Claims 1 to 5, **characterised in that** the annular bodies (15, 17) have an uninterrupted, closed annular shape.

7. The attenuation device according to any of Claims 1 to 6, **characterised in that** the annular bodies (15, 17) have a annular shape concentric to the flow axis (7).

8. The attenuation device according to any of Claims 1 to 7, **characterised in that** the attenuation material of the annular bodies (15, 17) is an open-pore or cellular material.

9. The attenuation device according to any of Claims 1 to 7, **characterised in that** the attenuation material of the annular bodies (15, 17) is a closed-pore material.

10. The attenuation device according to any of Claims 1 to 9, **characterised in that** the attenuation material is a plastic material.

11. The attenuation device according to Claim 10, **characterised in that** the attenuation material is a PU foam.

12. The attenuation device according to Claim 10, **characterised in that** the attenuation material is a synthetic rubber, in particular ethylene propylene diene rubber (EPDM), preferably foamed EPDM.

13. The attenuation device according to any of Claims 1 to 12, **characterised in that** the material of the casing (1) is a fluorinated rubber material, in particular based on vinylidene fluoride hexafluoropropylene copolymerisates.

## Revendications

1. Dispositif d'amortissement, notamment amortisseur de pulsations,
- comprenant une enveloppe (1), qui définit un espace (11) pour du fluide pouvant être parcouru par un fluide le long d'un axe (7) d'écoulement, et
- comprenant un élément d'amortissement en une matière cédant à la manière d'un ressort et se trouvant dans l'enveloppe,
- dans lequel l'élément d'amortissement a, en tant que paire de corps annulaires, deux corps (15, 17) annulaires entourant, au moins en partie, l'axe (7) d'écoulement et disposés, au moins en partie, l'un au-dessus de l'autre,
- **caractérisé en ce qu'**il y a au moins une autre paire de corps annulaires, qui a deux autres corps (15, 17) annulaires entourant, au moins en partie, l'axe (7) d'écoulement et disposés, au moins en partie, en étant l'un au-dessus de l'autre,
- **en ce que** l'enveloppe (1) des corps (15, 17) annulaires individuels à mettre en chambre est formée d'un cylindre creux à parois doubles, ayant une paroi (3) intérieure, délimitant l'espace (11) pour du fluide et le séparant d'une manière étanche au fluide de l'élément d'amortissement, paroi (3) à laquelle s'applique le corps (15) annulaire intérieur respectif, et une paroi (5) extérieure, se trouvant au-dessus du corps (17) annulaire extérieur respectif, et
- **en ce qu'**au moins deux paires ayant les corps (15, 17) annulaires s'entourant l'un l'autre sont reçues l'une derrière l'autre, considéré suivant l'axe (7) d'écoulement, dans le cylindre creux à parois doubles.

2. Dispositif d'amortissement suivant la revendication 1, **caractérisé en ce que** les corps (15, 17) annulaires ont la même longueur axiale.

3. Dispositif d'amortissement suivant la revendication 1 ou 2, **caractérisé en ce que** les corps (15, 17) annulaires ont la même épaisseur radiale.

4. Dispositif d'amortissement suivant l'une des revendications 1 à 3, **caractérisé en ce que** les corps (15, 17) annulaires sont disposés en s'appliquant l'un sur l'autre.

5. Dispositif d'amortissement suivant l'une des revendications 1 à 4, **caractérisé en ce que** le corps (15) annulaire intérieur le plus proche de l'axe (7) d'écoulement de chaque paire de corps annulaires est en une matière, qui a une élasticité plus grande que la matière du corps (17) annulaire se trouvant au-dessus.

6. Dispositif d'amortissement suivant l'une des revendications 1 à 5, **caractérisé en ce que** les corps (15, 17) annulaires ont une forme annulaire fermée sans interruption.

7. Dispositif d'amortissement suivant l'une des revendications 1 à 6, **caractérisé en ce que** les corps (15, 17) annulaires ont une forme annulaire concentrique à l'axe (7) d'écoulement.

8. Dispositif d'amortissement suivant l'une des revendications 1 à 7, **caractérisé en ce que** la matière d'amortissement des corps (15, 17) annulaires est une matière à pores ouverts ou cellulaire.

9. Dispositif d'amortissement suivant l'une des revendications 1 à 7, **caractérisé en ce que** la matière d'amortissement des corps (15, 17) annulaires est une matière à pores fermées.

10. Dispositif d'amortissement suivant l'une des revendications 1 à 9, **caractérisé en ce qu'**il est prévu une matière plastique comme matière d'amortissement.

11. Dispositif d'amortissement suivant la revendication 10, **caractérisé en ce qu'**il est prévu une mousse de PU comme matière d'amortissement.

12. Dispositif d'amortissement suivant la revendication 10, **caractérisé en ce qu'**il est prévu comme matière d'amortissement un caoutchouc synthétique, notamment un caoutchouc-éthylène-propylène-diène (EPDM), de préférence un EPDM mousse.

13. Dispositif d'amortissement suivant l'une des revendications 1 à 12, **caractérisé en ce qu'**il est prévu comme matière de l'enveloppe (1) une matière de caoutchouc fluoré, notamment à base de copolymère de fluorure de vinylidène et d'hexafluoropropylène.
